# FASCICULE DE BREVET EUROPEEN

(11) **EP 2 580 860 B1**
(45) Date de publication et mention de la délivrance du brevet: **22.01.2014**
(21) Numéro de dépôt: 11726896.1
(22) Date de dépôt: 25.05.2011
(51) Int. Cl.: H02M 7/46, H02M 7/537, H02P 27/08, H02P 29/02

(54) **ONDULEUR DE TENSION ET PROCEDE DE COMMANDE D'UN TEL ONDULEUR**
SPANNUNGSWANDLER UND VERFAHREN ZUR STEUERUNG EINES DERARTIGEN WANDLERS
VOLTAGE INVERTER AND METHOD OF CONTROLLING SUCH AN INVERTER

(30) Priorité: 14.06.2010 FR 1054690
(43) Date de publication de la demande: 17.04.2013
(73) Titulaire: HISPANO-SUIZA, 92700 Colombes (FR)
(72) Inventeur: BALPE, Cédric, F-77550 Moissy-Cramayel Cedex (FR)
(74) Mandataire: Camus, Olivier Jean-Claude
(86) Numéro de dépôt international: PCT/FR2011/051177
(87) Numéro de publication internationale: WO 2011/157916

(56) Documents cités:
- WO-A2-2008/087270
- WO-A2-2010/034906

## Description

### DOMAINE TECHNIQUE DE L'INVENTION

La présente invention concerne un onduleur de tension tolérant aux pannes. Un tel onduleur est destiné à permettre la conversion d'une tension continue en une ou plusieurs tensions alternatives, réversible en puissance. La présente invention concerne également un procédé de commande d'un tel onduleur.

### ETAT DE LA TECHNIQUE ANTERIEUR

De nombreux onduleurs sont utilisés pour convertir une tension continue en une ou plusieurs tensions alternatives, et ce en particulier dans le domaine aéronautique.

Un tel onduleur est généralement raccordé aux bornes d'une source de tension continue et il transforme la tension continue en tension alternative pour alimenter une charge alternative triphasée. Cette charge alternative peut être une machine triphasée à courant alternatif, tel un moteur synchrone à aimant permanent. Généralement un tel onduleur de tension comporte trois bras, comportant chacun deux moyens de commutation électriques connectés sur la source de tension continue. Pour chacun des trois bras, le point milieu des moyens de commutation est connecté à une phase de la charge alternative triphasée. Les moyens de commutations sont généralement formés d'un interrupteur statique et d'une diode en antiparallèle.

Or, dans le domaine aéronautique en particulier, la sécurité et la fiabilité sont primordiales. C'est pourquoi, un tel onduleur doit pouvoir continuer à fonctionner malgré la présence d'une ou plusieurs pannes internes.

Ainsi, l'état de la technique connaît plusieurs configurations permettant le fonctionnement de l'onduleur malgré la présence d'un ou plusieurs défauts. Le document FR2892243, notamment, décrit un onduleur tolérant aux pannes qui comporte en outre un quatrième bras relié à la source de tension. Ce quatrième bras présente deux moyens de commutation reliés en série et un point milieu. Le point milieu de ce quatrième bras est relié au neutre de la charge. En fonctionnement normal de l'onduleur, le quatrième bras est inactif. Mais, en cas de défaillance dans un des trois autres bras, le quatrième bras devient actif et il permet de contrôler le potentiel du neutre de la charge de manière à pouvoir piloter la charge sur les deux bras non défaillants via le point de neutre de la charge. Ainsi dans le cas d'une charge de type machine tournante électrique, on assure la continuité du champs tournant et donc de la production de couple.

La présence de ce quatrième bras permet donc bien le fonctionnement de l'onduleur en cas de défaillance d'un de ces bras. Toutefois, avec la solution présentée dans ce document, en cas de défaillance sur un des bras, la charge ne fonctionne plus que sur deux phases, ce qui conduit à une perte de puissance du moteur synchrone à aimant permanent, et donc à une perte de couple ou bien un surdimensionnement préalable du moteur.

Le document WO2010034906 divulgue un actionneur électrique qui intègre deux onduleurs de tension alimentant une machine électrique et qui est reconfigurable en présence d'un défaut. Le document WO2008087270 divulgue une alimentation à deux onduleurs en série pour actionneur électromécanique polyphasé.

### EXPOSE DE L'INVENTION

L'invention vise à remédier aux inconvénients de l'état de la technique en proposant un onduleur dont le fonctionnement est possible malgré la présence de défaillances internes.

Un autre objet de l'invention est de proposer un onduleur qui n'entraîne pas de perte du couple moteur, même en cas de défaillance interne.

Un autre objet de l'invention est de proposer un onduleur à haute disponibilité présentant un encombrement réduit.

Un autre objet de l'invention est de proposer un onduleur de tension qui peut fonctionner à basse vitesse sans se soucier du sur-courant.

Pour ce faire, est proposé selon un premier aspect de l'invention, un onduleur de tension comportant :
- Une charge comportant n phases, chaque phase présentant une première borne et une deuxième borne ;
- Une première et une deuxième cellules comportant chacune n bras , chaque bras comportant :
   o deux moyens de commutations reliés en série, chaque moyen de commutation pouvant être placé dans un état passant ou dans un état bloquant,
   o un point milieu positionné entre les deux moyens de commutations,
   chaque première borne de chacune des phases de la charge étant reliée à un des points milieu de la première cellule, chaque deuxième borne de chacune des phases de la charge étant reliée à un des points milieu de la deuxième cellule,
- une source de tension,
   la première et la deuxième cellules étant chacune connectée à la source de tension par l'intermédiaire de deux moyens d'isolation électrique, chaque moyen d'isolation électrique pouvant être placé dans un état passant ou dans un état bloquant.

L'onduleur selon l'invention est particulièrement remarquable en ce qu'il ne comporte pas de neutre permanent. En effet, au contraire des onduleurs de l'art antérieur, les différentes phases de la charge ne sont pas reliées à un point neutre permanent, mais à deux cellules, la première et la deuxième cellules qui sont identiques.

Les n bras appartenant à une même cellule sont de préférence reliés en parallèle.

L'onduleur selon l'invention présente deux modes de fonctionnement normaux possibles :
- Selon un premier mode de fonctionnement, chaque phase de la charge forme avec les deux bras auxquels elle est connectée, un pont en H. Dans ce cas, l'onduleur selon l'invention fonctionne sans neutre ;
- Selon un deuxième mode de fonctionnement, une des deux cellules de l'onduleur est isolée de la source de tension et ses moyens de commutations sont tels que cette cellule forme un point neutre, auquel sont connectées les n phases de la charge.

En cas de défaut dans une des cellules de l'onduleur, on transforme cette cellule défaillante en point neutre, grâce aux moyens de commutations de cette cellule, et on isole ce point neutre de la source de tension grâce aux moyens d'isolations électriques qui sont reliés à cette cellule. Ainsi, lorsqu'une cellule est défaillante, on transforme cette cellule en point neutre auquel sont reliés les n phases de la charge. Les n phases de la charge peuvent alors continuer à fonctionner normalement via la cellule non défaillante. Le montage selon l'invention permet donc l'utilisation de toutes les phases en cas de défaut dans un des bras, ce qui permet de ne pas perdre de puissance en cas de défaut dans un des bras de l'onduleur. Ainsi dans le cas d'une charge de type machine tournante électrique, on assure la continuité du champ tournant et donc de la production de couple.

En cas de défaut de circuit ouvert dans une des phases de la charge, on ouvre les moyens de commutation des deux bras qui sont reliés à la phase en défaut, de façon à ce que la phase en circuit ouvert soit déconnectée de la source de tension. L'onduleur selon l'invention ne fonctionne alors plus qu'avec les n-1 phases de la charge qui ne sont pas défaillantes.

L'onduleur selon l'invention est particulièrement avantageux, car quel que soit le nombre de phases de la charge, seuls quatre moyens d'isolation électriques sont utilisés.

En outre, l'onduleur selon l'invention utilise une seule source de tension et permet donc une économie du nombre de composants utilisés.

L'invention concerne tout particulièrement le cas où n est égal à 3.

La charge est de préférence une charge alternative triphasée, et de manière plus préférentiel encore un moteur synchrone à aimant permanent.

La source de tension est de préférence une source de tension continue. Cette source de tension est traditionnellement issue du redressement du réseau électrique de l'avion ; la source de tension peut aussi être directement un réseau de tension continue.

Avantageusement, chaque moyen de commutation est constitué d'un interrupteur statique et d'une diode en antiparallèle.

Avantageusement, l'interrupteur statique de chaque moyen de commutation est un transistor ou un thyristor.

Avantageusement, chaque moyen d'isolation électrique est un interrupteur bidirectionnel.

Selon un mode de réalisation très préférentiel, l'onduleur selon l'invention comporte en outre un dispositif de commande et de surveillance des défaillances apte à :
- commander les moyens de commutations et les moyens d'isolation électrique,
- à détecter la défaillance d'un des moyens de commutation et
- à détecter la défaillance de la liaison entre une des bornes d'une des phases et un des points milieu.

Selon différents modes de réalisation :
- le dispositif de commande et de surveillance peut être constitué de plusieurs unités élémentaires de commande et de surveillance, chaque unité élémentaire de commande et de surveillance étant en charge d'un moyen de commutation ou d'un moyen d'isolation électrique ;
- le dispositif de commande et de surveillance peut être constitué d'une seule unité de commande et de surveillance qui est en charge de tous les moyens de commutation et de tous les moyens d'isolation électriques.

Avantageusement, le dispositif de commande et de surveillance est apte à commander l'état des moyens de commutations et des moyens d'isolation électrique.

Selon un mode de réalisation préférentiel, chaque point milieu est en outre connecté à un point neutre par l'intermédiaire d'un élément de commutation, l'élément de commutation pouvant être placé dans un état bloquant ou dans un état passant.

Ces connexions des points milieu à un point neutre sont particulièrement avantageuses en cas de court-circuit non franc dans un des moyens de commutation. En effet, en cas de court-circuit dans un des moyen de commutation, on se sert de ce court-circuit pour transformer la cellule auquel appartient le moyen de commutation en court circuit en point neutre. Or, si le court circuit n'est pas complet, cela peut entraîner un déséquilibre de la charge. Afin de remédier à ce problème, on relie tous les point milieu à un point neutre par l'intermédiaire d'éléments de commutation. En fonctionnement normal, tous les éléments de commutation sont dans un état bloquant, de sorte que les points milieu ne sont pas reliés électriquement au neutre. Par contre, en cas de court-circuit dans un des moyens de commutation, le point milieu du bras auquel il appartient est automatiquement relié au neutre en plaçant l'élément de commutation auquel il est relié dans un état passant. De cette façon, on force le court-circuit et donc la cellule dans laquelle le moyen de commutation est en court-circuit, forme toujours un point neutre parfait.

Avantageusement, le dispositif de commande et de surveillance est également apte à détecter une défaillance dans un des éléments de commutation.

Avantageusement, le dispositif de commande et de surveillance est également apte à commander les éléments de commutation de façon à les placer dans un état bloquant ou dans un état passant.

L'invention concerne également un procédé de commande d'un onduleur selon l'invention, selon lequel, lorsqu'aucune défaillance n'est détectée, le procédé de commande comporte les étapes suivantes :
- Mise dans un état bloquant des moyens d'isolation électrique reliés à la première cellule,
- Commande des moyens de commutation de la première cellule de façon à ce que la première cellule forme un point neutre auquel sont reliées les n phases de la charge,
- Mise dans un état passant des moyens d'isolation électrique reliés à la deuxième cellule;
- Commande des moyens de commutations de la deuxième cellule de façon à ce que les deux moyens de commutation d'un même bras de la deuxième cellule soient dans des états opposés, l'un étant passant et l'autre bloqué.

Ainsi, selon ce procédé, lorsqu'aucune défaillance n'est détectée, et donc que l'onduleur est en fonctionnement normal, une des deux cellules, qui est appelée ici la première cellule, mais qui pourrait tout aussi bien être la deuxième cellule puisque l'onduleur selon l'invention est totalement symétrique, est transformée en point neutre auquel sont reliées toutes les phases de la charge. Ce point neutre est isolé de la source de tension grâce aux moyens d'isolation électrique. La deuxième cellule, c'est-à-dire celle qui n'est pas transformée en point neutre, continue elle à fonctionner comme les cellules de l'art antérieur, c'est-à-dire que les moyens de commutations de chacun de ces bras sont placés alternativement dans des états opposés. Ainsi, selon ce mode de réalisation, l'onduleur selon l'invention fonctionne, en l'absence de défaillance, comme les onduleurs de l'art antérieur qui comportaient une seule cellule constituée de trois bras, le point milieu de chaque bras étant relié à une phase de la charge.

Selon un autre mode de réalisation, l'invention concerne également un procédé de commande d'un onduleur de tension selon l'invention, dans lequel, lorsqu'aucune défaillance n'est détectée, le procédé de commande comporte les étapes suivantes :
- Mise dans un état passant de tous les moyens d'isolations électriques ;
- Commande des moyens de commutations de façon à ce que chaque phase forme avec les deux bras auxquels elle est reliée un pont en H.

Selon cet autre mode de réalisation, la charge fonctionne sans neutre. En effet, chaque phase est reliée à deux points milieu, chaque point milieu appartenant à un des bras d'une des cellules.

Par « pont en H », on entend un montage connu de l'homme du métier, dans lequel la phase forme la barre horizontale du H, et un bras de chaque cellule forment les bras verticaux du H.

Dans ce mode de fonctionnement, les moyens de commutation sont de préférence actionnés deux par deux :
- le moyen de commutation supérieur du bras de la première cellule est dans le même état que le moyen de commutation inférieur du bras de la deuxième cellule ;
- le moyen de commutation inférieur du bras de la première cellule est dans le même état que le moyen de commutation supérieur du bras de la deuxième cellule ;
- les moyens de commutation d'un même bras sont dans des états opposés.

Ce mode de réalisation en pont en H permet une meilleure utilisation de la plage de tension disponible, et à puissance égale, on utilise moins de courant qu'avec le procédé de commande selon le mode de réalisation précédent.

L'invention concerne également un procédé de commande d'un onduleur de tension dans lequel, lorsqu'une défaillance est détectée dans un des moyens de commutation, le procédé de commande comporte les étapes suivantes :
- Mise dans un état bloquant des moyens d'isolation électrique qui sont reliés à la cellule auquel appartient le moyen de commutation défaillant ;
- Commande des autres moyens de commutation de la cellule auquel appartient le moyen de commutation défaillant de façon à ce que la cellule auquel appartient le moyen de commutation défaillant forme un point neutre auquel sont reliées les n phases de la charge.

Ainsi, selon ce procédé, en cas de défaut dans un des moyens de commutations, on contrôle les autres moyens de commutation de la cellule auquel appartient le moyen de commutation en défaut, de façon à ce que la cellule à laquelle appartient le moyen de commutation en défaut forme un point neutre, auquel sont reliées toutes les phases de la charge. De cette façon, même si un des moyens de commutation est en défaut, on peut continuer à utiliser toutes les phases de la charge.

L'invention concerne également un procédé de commande d'un onduleur tel que, lorsqu'une défaillance est détectée sur la liaison entre une des bornes d'une des phases et un des points milieu, le procédé de commande comporte l'étape suivante :
- Mise dans un état bloquant des moyens de commutation qui sont reliés à la phase qui appartient à la liaison défaillante.

De cette façon, lorsqu'une des phases de la charge est en circuit-ouvert, on ouvre les deux bras auxquels elle est reliée et on peut alors continuer à utiliser toutes les autres phases de la charge.

L'invention concerne également un procédé de commande d'un onduleur selon l'invention tel que, lorsqu'un défaut de court-circuit est détecté dans un des moyens de commutation, l'élément de commutation auquel est relié le moyen de commutation en court-circuit est mis dans l'état passant.

L'invention concerne également un procédé de commande d'un onduleur selon l'invention tel que, lorsqu'aucun défaut de court-circuit n'est détecté dans les moyens de commutation, tous les éléments de commutation sont placés dans l'état bloquant.

Avantageusement, le dispositif de commande et de surveillance de l'onduleur selon l'invention est apte à mettre en oeuvre les étapes des procédés de commande décrit ci-dessus.

### BREVE DESCRIPTION DES FIGURES

D'autres caractéristiques et avantages de l'invention ressortiront à la lecture de la description qui suit, en référence aux figures annexées, qui illustrent :
- la figure 1, une représentation schématique d'un onduleur de tension selon un mode de réalisation de l'invention ;
- la figure 2, une représentation schématique de l'onduleur de tension de la figure 1 en cas de court-circuit dans un des moyens de commutations ;
- la figure 3, une représentation schématique de l'onduleur de tension de la figure 1 en cas de circuit ouvert dans un des moyens de commutations ;
- la figure 4, une représentation schématique de l'onduleur de tension de la figure 1 en cas de défaut de circuit ouvert dans la liaison entre une des phases de la charge et un des bras d'une des cellules de l'onduleur ;
- la figure 5, une représentation schématique d'un onduleur de tension selon un mode de réalisation de l'invention,
- la figure 6, une représentation schématique de l'onduleur de la figure 1 selon un premier mode de fonctionnement normal,
- la figure 7, une représentation schématique de l'onduleur de la figure 1 selon un deuxième mode de fonctionnement normal.

Pour plus de clarté, les éléments identiques ou similaires sont repérés par des signes de référence identiques sur l'ensemble des figures.

### DESCRIPTION DETAILLEE D'UN MODE DE REALISATION

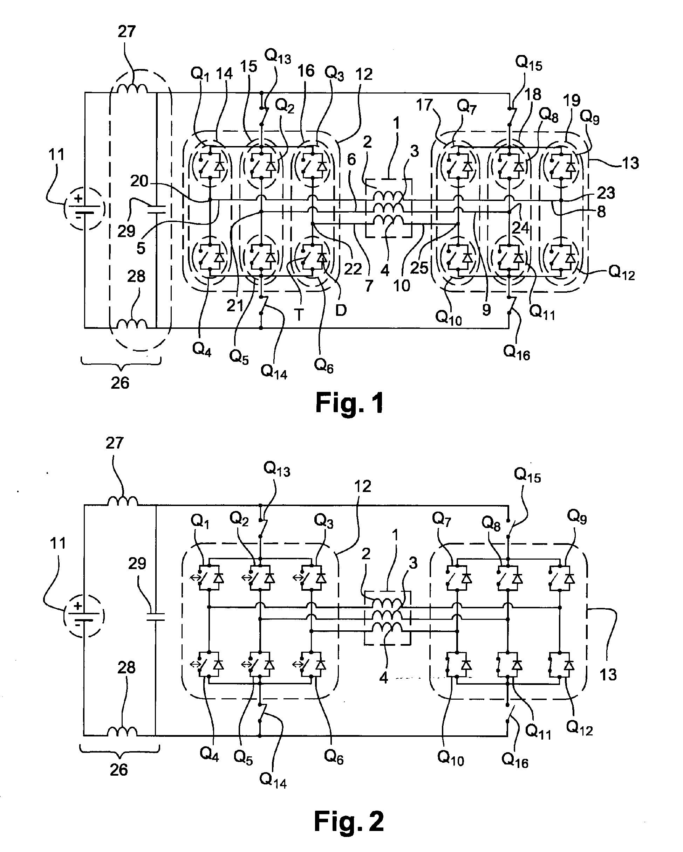

La figure 1 représente un onduleur de tension selon un mode de réalisation de l'invention. Cet onduleur de tension est un onduleur triphasé destiné à moduler l'énergie électrique échangée entre deux sources d'énergie électriques dont une est une source de tension continue 11 et l'autre une charge 1 alternative triphasée. Un tel onduleur peut être bidirectionnel en puissance.

La charge 1 comporte trois phases respectivement 2, 3 et 4. La charge 1 est de préférence un moteur synchrone à aimant permanent.

Chaque phase comporte une première borne, respectivement 5, 6 et 7 et une deuxième borne, respectivement 8, 9 et 10.

L'onduleur de tension comporte également une première cellule 12 et une deuxième cellule 13. Chaque cellule 12, 13 comporte trois bras, respectivement 14, 15, 16 et 17, 18, 19. Les trois bras de chaque cellule sont reliés entre eux en parallèle.

Chaque bras comporte deux moyens de commutations Q1/Q4, Q2/Q5, Q3/Q6, Q7/Q10, Q8/Q11, Q9/Q12. Les deux moyens de commutation d'un même bras sont reliés en série. Entre deux moyens de commutations d'un même bras se trouve un point milieu 20, 21, 22, 23, 24, 25.

Chaque moyen de commutation peut être placé dans un état passant ou dans un état bloquant.

Chaque moyen de commutation est de préférence constitué d'un interrupteur statique T et d'une diode D en antiparallèle. L'interrupteur statique est de préférence un transistor, par exemple de type IGBT (transistor bipolaire à porte isolée), ou un thyristor.

Chaque première borne 5, 6, 7 de chaque phase est connectée à un et un seul des points milieu de la première cellule, respectivement 20, 21, 22.

Chaque deuxième borne 8, 9, 10 de chaque phase est connectée à un et un seul des points milieu de la deuxième cellule, respectivement 23, 24, 25.

Chaque phase 2, 3, 4 forme donc avec un des bras de la première cellule et un des bras de la deuxième cellule un pont en H.

La première cellule 12 est reliée à la borne + de la source de tension 11 par l'intermédiaire d'un premier moyen d'isolation électrique Q13. La première cellule 12 est reliée à la borne - de la source de tension 11 par l'intermédiaire d'un deuxième moyen d'isolation électrique Q14.

La deuxième cellule 13 est reliée à la borne + de la source de tension 11 par l'intermédiaire d'un troisième moyen d'isolation électrique Q15. La deuxième cellule 13 est reliée à la borne - de la source de tension par l'intermédiaire d'un quatrième moyen d'isolation électrique Q16.

Chaque moyen d'isolation électrique peut être placé dans un état passant ou dans un état bloquant.

Chaque moyen d'isolation électrique est de préférence constitué d'un interrupteur qui est bidirectionnel puisque le courant est alternatif.

L'onduleur selon l'invention peut en outre comporter un étage de filtrage 26 disposé entre la source de tension 11 et la première et la deuxième cellule 12, 13.

Cet étage de filtrage 26 comporte de préférence deux inductances 27, 28 en série avec la source de tension 11 et une capacité 29 en parallèle avec la source de tension 11.

L'onduleur de tension décrit précédemment peut fonctionner selon deux modes de fonctionnement normaux en l'absence de défaillance.

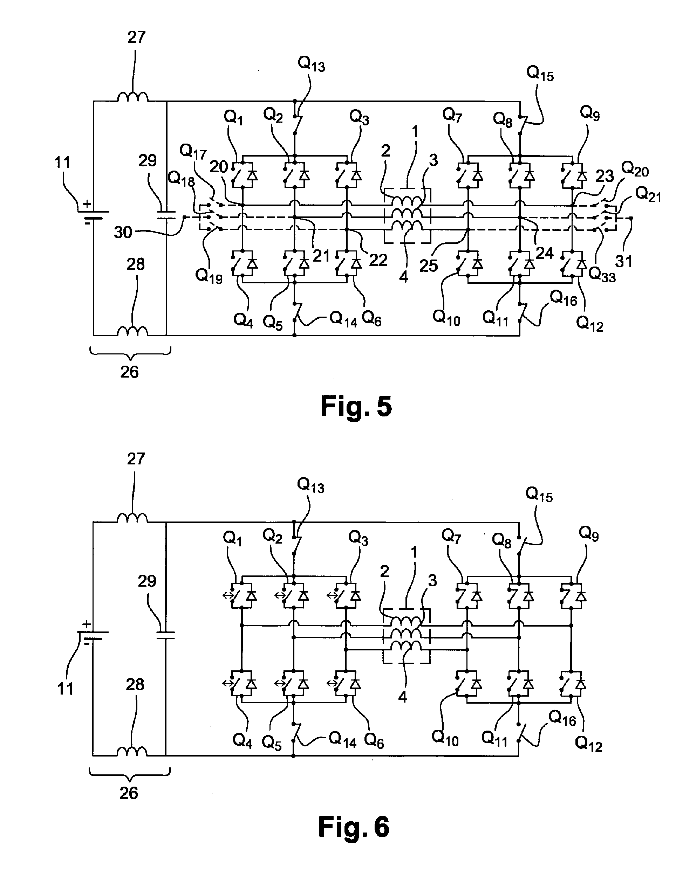

Selon le premier mode de fonctionnement normal, représenté sur la figure 6, une des cellules, soit la première cellule, soit la deuxième cellule, forme un point neutre, tandis que l'onduleur fonctionne avec l'autre cellule, comme dans les onduleurs de l'art antérieur.

Dans la suite, nous supposerons que le point neutre est formé par la deuxième cellule 13, mais la même description pourrait être faite dans le cas où le point neutre serait formé par la première cellule puisque les deux cellules sont parfaitement identiques.

Dans ce cas, les deux moyens d'isolation électriques Q15 et Q16 qui relient la deuxième cellule 13 à la source de tension 11 sont placés dans un état bloquant de façon à ce que la deuxième cellule 13 soit déconnectée de la source de tension 11. Par ailleurs, les moyens de commutations Q7 à Q12 de la deuxième cellule 13 sont dans un état tel que la deuxième cellule 13 forme un point neutre auquel sont reliés les trois phases 2, 3, 4 de la charge.

Pour cela, les moyens de commutations supérieurs Q7, Q8, Q9 sont placés dans un état bloquant, tandis que les moyens de commutations inférieurs Q10, Q11, Q12 sont placés dans un état passant, ou l'inverse.

La première cellule 12, elle, fonctionne comme dans les onduleurs de l'art antérieur. Ainsi, selon un mode de réalisation préférentiel, les moyens de commutation d'un même bras sont dans des états opposés, l'un étant bloquant, tandis que l'autre est passant.

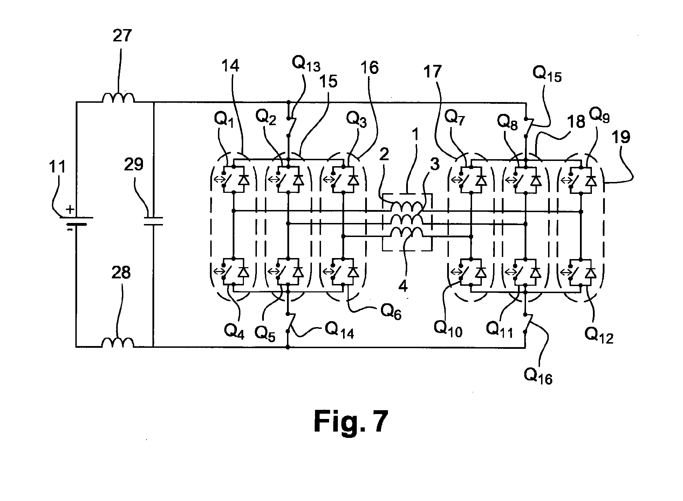

Selon le second mode de fonctionnement normal, représenté sur la figure 7, l'onduleur de tension fonctionne sans point neutre. Dans ce cas, les quatre moyens d'isolation électrique Q13, Q14, Q15, Q16 sont dans un état passant.

En outre, chaque phase forme avec les deux bras auquel elle est reliée un pont en H dans lequel les deux moyens de commutation d'un même bras sont dans des états opposés, l'un étant passant tandis que l'autre est dans un état bloquant.

Ainsi, la phase 2 forme avec les bras 14 et 19 un premier pont en H. La phase 3 forme avec les bras 15 et 18 un deuxième pont en H. La phase 4 forme avec les bras 16 et 17 un troisième pont en H.

En outre, lorsque le moyen de commutation supérieur d'un bras de la première cellule est dans un état passant, le moyen de commutation inférieur du bras de la deuxième cellule qui appartient au même pont en H est également dans un état passant.

Ainsi, lorsque les moyens de commutation Q1 et Q12 sont dans un état passant, les moyens de commutation Q4 et Q9 sont dans un état bloquant et inversement.

De même, lorsque les moyens de commutation Q2 et Q11 sont dans un état passant, les moyens de commutation Q5 et Q8 sont dans un état bloquant et inversement.

De même, lorsque les moyens de commutation Q3 et Q10 sont dans un état passant, les moyens de commutation Q6 et Q7 sont dans un état bloquant et inversement.

Ce mode de fonctionnement normal sans point neutre est particulièrement avantageux car il permet d'inverser la polarité de tension aux bornes de chaque phase et l'onduleur de tension peut alors fonctionner sur une plus grande plage de tension. Ainsi, selon ce mode de fonctionnement, la plage de tension est deux fois plus grande que selon le mode de fonctionnement normal décrit précédemment, c'est-à-dire que la plage de tension est égale au double de la plage de tension de la source de tension 11.

La figure 2 représente l'état du montage de la figure 1 en cas de défaut, et plus particulièrement en cas de court-circuit dans le moyen de commutation Q10.

Dans ce cas, les deux autres moyens de commutation appartenant à la même cellule 13 que le moyen de commutation Q10 en court circuit et qui sont connexes au moyen de commutation Q10 en court circuit, c'est-à-dire Q11 et Q12, sont fermés (ou dans un état passant).

Les moyens de commutation appartenant à la même cellule 13 que le moyen de commutation Q10 en court circuit, et qui sont opposés au moyen de commutation en court circuit, c'est-à-dire Q7, Q8, Q9, sont ouverts (ou dans un état bloquant).

Les moyens d'isolation électrique Q15 et Q16 qui relient la cellule 13 à laquelle appartient le moyen de commutation Q10 en court-circuit sont mis dans un état bloquant de façon à ce que la cellule 13 à laquelle appartient le moyen de commutation Q10 défaillant soit isolée électriquement de la source de tension 11.

De cette façon, la cellule 13 à laquelle appartient le moyen de commutation défaillant forme un point neutre auquel sont reliées les trois phases 2, 3, 4 de la charge 1. L'onduleur selon l'invention peut alors continuer à fonctionner en utilisant les trois phases de la charge, malgré la présence d'un court circuit dans une des cellules, et donc il n'y a pas de perte de puissance malgré la présence d'un court circuit dans un des moyens de commutation.

Dans ce cas, l'autre cellule, qui est ici la première cellule 12, continue à fonctionner normalement, c'est-à-dire que les deux moyens de commutation d'un même bras sont dans des états opposés l'un de l'autre, l'un étant bloquant tandis que l'autre est passant.

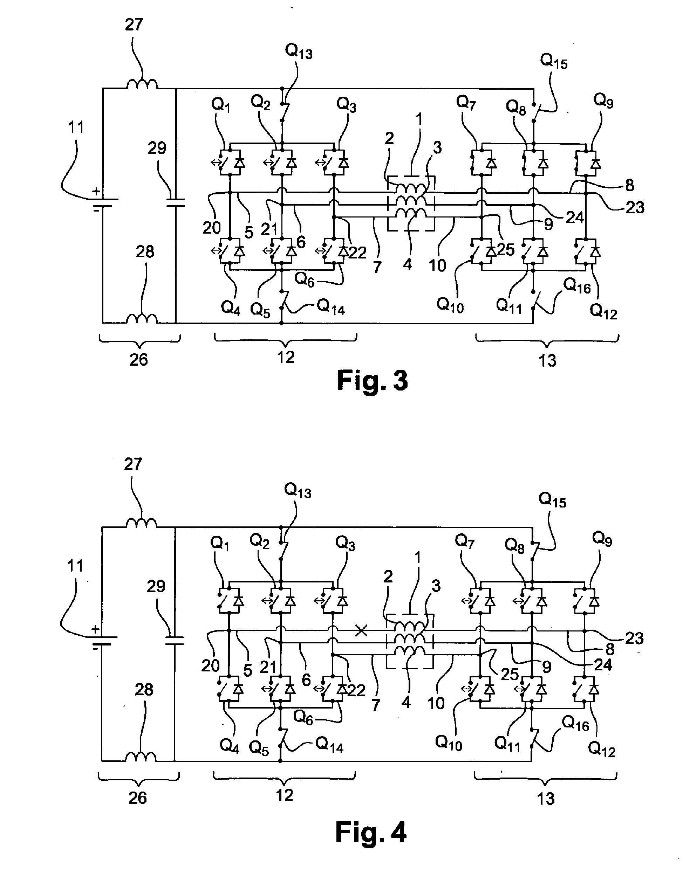

La figure 3 représente l'onduleur de la figure 1 en cas de circuit ouvert dans un des moyens de commutation, qui est ici le moyen de commutation Q10.

Dans ce cas, les moyens de commutation qui appartiennent à la même cellule 13 que le moyen de commutation Q10 en circuit ouvert et qui sont connexes au moyen de commutation Q10 en circuit ouvert, c'est-à-dire Q11 et Q12, sont mis dans un état passant.

Les moyens de commutation qui appartiennent à la même cellule 13 que le moyen de commutation Q10 en circuit ouvert et qui sont opposés au moyen de commutation Q10 en circuit ouvert, c'est-à-dire Q7, Q8, Q9 sont mis dans un état bloquant.

Les moyens d'isolation Q15 et Q16 que relient la cellule 13 à laquelle appartient le moyen de commutation en circuit ouvert à la source de tension 11 sont eux mis dans un état bloquant de façon à ce que la cellule 13 soit déconnectée de la source de tension.

Ainsi, comme dans le cas de la figure 2, la cellule à laquelle appartient le moyen de commutation Q10 en défaut est transformée en point neutre en utilisant le moyen de commutation en défaut.

L'autre cellule 12 continue elle à fonctionner normalement.

La figure 4 représente l'onduleur de la figure 1 en cas de circuit ouvert dans une des phases, qui est dans cet exemple la phase 2. Plus précisément, la liaison entre la borne 5 de la phase 2 de la charge 1 et le point milieu 20 du bras 14 de la première cellule est en circuit ouvert.

Dans ce cas, tous les moyens de commutation électrique Q13, Q14, Q15, Q16 restent dans un état passant.

Les moyens de commutations Q1, Q4, Q9, Q12 qui sont reliés à la phase 2 en circuit ouvert sont eux mis dans un état bloquant de façon à déconnecter la phase 2 en défaut du reste du circuit.

L'onduleur en défaut continue alors à fonctionner avec les deux autres phases 3 et 4 qui ne sont pas en défaut. Ainsi, ces deux phases sont pilotées par les moyens de commutations Q2, Q3, Q5, Q6, Q7, Q8, Q10, Q11.

La figure 5 représente un onduleur selon un autre mode de réalisation de l'invention. L'onduleur de la figure 5 est identique à celui de la figure 1 mais il comporte en outre six éléments de commutation Q17 à Q22.

Les trois premiers éléments de commutation Q17 à Q19 relient les trois points milieu 20, 21, 22 de la première cellule 12 à un premier point neutre 30. Les trois éléments de commutation Q20 à Q22 relient les trois points milieu 23, 24, 25 de la deuxième cellule à un deuxième point neutre 31.

Chaque élément de commutation est de préférence constitué par un interrupteur.

En fonctionnement normal de l'onduleur, les éléments de commutation Q19 à Q22 sont dans un état bloquant.

En cas de court circuit dans un des moyens de commutation, par exemple Q10, l'élément de commutation Q22 auquel est relié le point milieu 25 du bras auquel appartient Q10 est mis dans un état passant de façon à ce que la bras au quel appartient Q1 à soit mis dans un état de court circuit parfait. De cette façon, même si le court circuit de Q10 n'était pas parfait, la cellule 13 à laquelle appartient Q1 à sera transformée en point neutre parfait.

Les autres éléments de commutation Q20 et Q21 qui relient les points neutre de la cellule 13 auquel appartient le moyen de commutation Q10 en court circuit peuvent également être mis dans un état passant dès qu'un des moyens de commutation de la cellule 13 est en court circuit.

En cas de défaut de circuit ouvert, les éléments de commutation restent à l'état bloquant.

En cas de défaut de court circuit dans une des phases de la charge, par exemple dans la phase 2, les éléments de commutation Q17 et Q20 qui sont reliés à cette phase peuvent être mis dans l'état passant.

Naturellement, l'invention n'est pas limitée aux modes de réalisation décrits en référence aux figures et des variantes peuvent être envisagées sans sortir du cadre de la présente invention.

## Revendications

1. Onduleur de tension comportant :
- Une charge (1) comportant n phases (2, 3, 4), chaque phase (2, 3, 4) présentant une première borne (5, 6, 7) et une deuxième borne (8, 9, 10) ;
- Une première (12) et une deuxième cellules (13) comportant chacune n bras (14, 15, 16, 17, 18, 19), chaque bras comportant :
o deux moyens de commutations (Ql/Q4, Q2/Q5, Q3/Q6, Q7/Q10, Q8/Q11, Q9/Q12) reliés en série, chaque moyen de commutation pouvant être placé dans un état passant ou dans un état bloquant,
o un point milieu (20, 21, 22, 23, 24, 25) positionné entre les deux moyens de commutations,
chaque première borne (5, 6, 7) de chacune des phases (2, 3, 4) de la charge étant reliée à un des points milieu (20, 21, 22) de la première cellule (12), chaque deuxième borne (8, 9, 10) de chacune des phases (2, 3, 4) de la charge étant reliée à un des points milieu (23, 24, 25) de la deuxième cellule (13),
- une source de tension (11),
**caractérisé en ce que** la première cellule est reliée à la borne positive de la source de tension par l'intermédiaire d'un premier moyen d'isolation électrique et à la borne négative de la source de tension par l'intermédiaire d'un deuxième moyen d'isolation électrique, et **en ce que** la deuxième cellule est reliée à la borne positive de la source de tension par l'intermédiaire d'un troisième moyen d'isolation électrique et à la borne négative par l'intermédiaire d'un quatrième moyen d'isolation électrique, chaque moyen d'isolation électrique pouvant être placé dans un état passant ou dans un état bloquant.

2. Onduleur de tension selon la revendication précédente, **caractérisé en ce que** chaque moyen de commutation (Ql/Q4, Q2/Q5, Q3/Q6, Q7/Q10, Q8/Q11, Q9/Q12) est constitué d'un interrupteur statique (T) et d'une diode (D) en antiparallèle.

3. Onduleur de tension selon l'une quelconque des revendications précédentes, **caractérisé en ce qu'**il comporte en outre un dispositif de commande et de surveillance des défaillances apte à :
- commander les moyens de commutations et les moyens d'isolation électrique,
- à détecter la défaillance d'un des moyens de commutation et
- à détecter la défaillance de la liaison entre une des bornes d'une des phases et un des points milieu.

4. Onduleur de tension selon l'une quelconque des revendications précédentes, **caractérisé en ce que** chaque point milieu (20, 21, 22, 23, 24, 25) est connecté à un point neutre (30, 31) par l'intermédiaire d'un élément de commutation (Q17, Q18, Q19, Q20, Q21, Q22), l'élément de commutation pouvant être placé dans un état bloquant ou dans un état passant.

5. Procédé de commande d'un onduleur de tension selon l'une quelconque des revendications 1 à 4, **caractérisé en ce que**, lorsqu'aucune défaillance n'est détectée, le procédé de commande comporte les étapes suivantes :
- Mise dans un état bloquant des moyens d'isolation électrique (Q13, Q14) reliés à la première cellule (12),
- Commande des moyens de commutation (Q1, Q2, Q3, Q4, Q5, Q6) de la première cellule (12) de façon à ce que la première cellule (12) forme un point neutre auquel sont reliées les n phases (2, 3, 4) de la charge (1),
- Mise dans un état passant des moyens d'isolation électrique (Q15, Q16) reliés à la deuxième cellule (13);
- Commande des moyens de commutations (Q7, Q8, Q9, Q10, Q11, Q12) de la deuxième cellule (13) de façon à ce que les deux moyens de commutation d'un même bras (Q7/Q10, Q8/Q11, Q9/Q12) de la deuxième cellule (13) soient dans des états opposés, l'un étant passant et l'autre étant bloquant.

6. Procédé de commande d'un onduleur de tension selon l'une quelconque des revendications 1 à 4, **caractérisé en ce que**, lorsqu'aucune défaillance n'est détectée, le procédé de commande comporte les étapes suivantes :
- Mise dans un état passant des quatre moyens d'isolations électriques (Q13, Q14, Q15, Q16) ;
- Commande des moyens de commutations (Q1 à Q12) de façon à ce que chaque phase (2, 3, 4) forme avec les deux bras auxquels elle est reliée un pont en H.

7. Procédé de commande d'un onduleur de tension selon l'une quelconque des revendications 1 à 4, **caractérisé en ce que**, lorsqu'une défaillance est détectée dans un des moyens de commutation (Q10), le procédé de commande comporte les étapes suivantes :
- Mise dans un état bloquant des moyens d'isolation électrique (Q15, Q16) qui sont reliés à la cellule (13) auquel appartient le moyen de commutation (Q10) défaillant ;
- Commande des autres moyens de commutation (Q7, Q8, Q9, Q11, Q12) de la cellule (13) auquel appartient le moyen de commutation défaillant (Q10) de façon à ce que la cellule (13) auquel appartient le moyen de commutation défaillant (Q10) forme un point neutre auquel sont reliées les n phases (2, 3, 4) de la charge (1).

8. Procédé de commande d'un onduleur de tension selon l'une quelconque des revendications 1 à 4, **caractérisé en ce que**, lorsqu'une défaillance est détectée dans la liaison entre une des bornes d'une des phases (2) et un des points milieu (20), le procédé de commande comporte les étapes suivantes :
- Mise dans un état bloquant des moyens de commutation (Q1, Q4, Q9, Q12) qui sont reliés à la phase (2) qui appartient à la liaison défaillante.

9. Procédé de commande d'un onduleur de tension selon la revendication 4, **caractérisé en ce que**, lorsqu'un défaut de court-circuit est détecté dans un des moyens de commutation (Q10), l'élément de commutation (Q22) auquel est relié le moyen de commutation en court-circuit (Q10) est mis dans l'état passant.

10. Procédé de commande d'un onduleur selon la revendication 4, **caractérisé en ce que**, lorsqu'aucun défaut de court-circuit n'est détecté dans les moyens de commutation, tous les éléments de commutation (Q17, Q18, Q19, Q20, Q21, Q22) sont placés dans l'état bloquant.

## Patentansprüche

1. Spannungswechselrichter, umfassend:
- Eine Last (1) mit n Phasen (2, 3, 4), wobei jede Phase (2, 3, 4) eine erste Klemme (5, 6, 7) und eine zweite Klemme (8, 9, 10) umfasst;
- Eine erste (12) und eine zweite Zelle (13), jeweils mit n Armen (14, 15, 16, 17, 18, 19), wobei jeder Arm umfasst:
o zwei Schaltmittel (Q1/Q4, Q2/Q5, Q3/Q6, Q7/Q10, Q8/Q11, Q9/Q12), die in Serie miteinander verbunden sind, wobei jedes Schaltmittel in einen Durchgangszustand oder in einen Verriegelungszustand geschaltet werden kann,
o einen Mittelpunkt (20, 21, 22, 23, 24, 25), der zwischen den zwei Schaltmittel positioniert ist,
wobei jede erste Klemme (5, 6, 7) jeder Phase (2, 3, 4) der Last an einen der Mittelpunkte (20, 21, 22) der ersten Zelle (12) angeschlossen ist, jede zweite Klemme (8, 9, 10) jeder Phase (2, 3, 4) der Last an einen der Mittelpunkte (23, 24, 25) der zweiten Zelle (13) angeschlossen ist,
- eine Spannungsquelle (11),
**dadurch gekennzeichnet, dass** die erste Zelle anhand eines ersten elektrischen Isolationsmittels an die positive Klemme der Spannungsquelle und über ein zweites elektrisches Isolationsmittel an die negative Klemme der Spannungsquelle angeschlossen ist, und dadurch, dass die zweite Zelle anhand eines dritten elektrischen Isolationsmittels an die positive Klemme der Spannungsquelle und anhand eines vierten elektrischen Isolationsmittels an die negative Klemme angeschlossen ist, wobei jedes elektrische Isolationsmittel in einen Durchgangszustand oder in einen Verriegelungszustand geschaltet sein kann.

2. Spannungswechselrichter gemäß dem voranstehenden Anspruch, **dadurch gekennzeichnet, dass** jedes Kommunikationsmittel (Ql/Q4, Q2/Q5, Q3/Q6, Q7/Q10, Q8/Q11, Q9/Q12) aus einem statischen Unterbrecher (T) und einer antiparallel geschalteten Diode (D) gebildet ist.

3. Spannungswechselrichter gemäß einem der voranstehenden Ansprüche, **dadurch gekennzeichnet, dass** er darüber hinaus eine Steuer- und Überwachungsvorrichtung der Störungen umfasst, die geeignet ist:
- die Schaltmittel und die elektrischen Isolationsmittel zu steuern,
- den Ausfall eines der Schaltmittel zu erfassen und
- den Ausfall der Verbindung zwischen einer der Klemmen einer der Phasen und eines der Mittelpunkte zu erfassen.

4. Spannungswechselrichter gemäß einem der voranstehenden Ansprüche, **dadurch gekennzeichnet, dass** jeder Mittelpunkt (20, 21, 22, 23, 24, 25) anhand eines Schaltelements (Q17, Q18, Q19, Q20, Q21, Q22) an einen Nullpunkt (30, 31) angeschlossen ist, wobei das Schaltelement in einen Verriegelungszustand oder in einen Durchgangszustand geschaltet werden kann.

5. Steuerverfahren eines Spannungswechselrichters gemäß Anspruch 1 bis 4, **dadurch gekennzeichnet, dass**, wenn kein Ausfall erfasst wird, das Steuerverfahren die folgenden Stufen umfasst:
- Schalten der an die erste Zelle (12) angeschlossenen elektrischen Isolationsmittel (Q13, Q14) in einen Verriegelungszustand,
- Steuerung der Schaltmittel (Q1, Q2, Q3, Q4, Q5, Q6) der ersten Zelle (12) derart, dass die erste Zelle (12) einen Nullpunkt bildet, an den die n Phasen (2, 3, 4) der Last (1) angeschlossen sind,
- Schalten der an die zweite Zelle (13) angeschlossenen elektrischen Isolationsmittel (Q15, Q16) in einen Durchgangszustand;
- Schalten der Schaltmittel (Q7, A8, Q9, Q10, Q11, Q12) der zweiten Zelle (13) derart, dass die zweiten Schaltmittel eines und desselben Arms (Q7/Q10, Q8/Q11, Q9/Q12) der zweiten Zelle (13) in entgegengesetzten Zuständen sind, wobei der eine ein Durchgangszustand ist und der andere ein Verriegelungszustand.

6. Steuerverfahren eines Spannungswechselrichters gemäß Anspruch 1 bis 4, **dadurch gekennzeichnet, dass**, wenn kein Ausfall erfasst wird, das Steuerverfahren die folgenden Stufen umfasst:
- Schalten der vier elektrischen Isolationsmittel (Q13, Q14, Q15, Q16) in einen Durchgangszustand;
- Steuerung der Schaltmittel (Q1 bis Q12) derart, dass jede Phase (2, 3, 4) mit den zwei Armen, an die sie angeschlossen ist, eine H-förmige Brücke bildet.

7. Steuerverfahren eines Spannungswechselrichters gemäß Anspruch 1 bis 4, **dadurch gekennzeichnet, dass**, wenn ein Ausfall in einem der Schaltmittel (Q10) erfasst wird, das Schaltverfahren die folgenden Stufen umfasst:
- Schalten der elektrischen Isolationsmittel (Q15, Q16), die an die Zelle (13) angeschlossen sind, zu der das ausgefallene Schaltmittel (Q10) gehört, in einen Verriegelungszustand;
- Steuerung der anderen Schaltmittel (Q7, Q8, Q9, Q11, Q12) der Zelle (13), zu der das ausgefallene Schaltmittel (Q10) gehört, derart, dass die Zelle (13), zu der das ausgefallene Schaltmittel (Q10) gehört, einen Nullpunkt bildet, an den die n Phasen (2, 3, 4) der Last (1) angeschlossen sind.

8. Steuerverfahren eines Spannungswechselrichters gemäß Anspruch 1 bis 4, **dadurch gekennzeichnet, dass**, wenn ein Ausfall in der Verbindung zwischen den Klemmen einer der Phasen (2) und dem Mittelpunkt (20) erfasst wird, das Steuerverfahren die folgenden Stufen umfasst:
- Schalten der Schaltmittel (Q1, Q4, Q9, Q12), die an die Phase (2) angeschlossen sind, die zur ausgefallenen Verbindung gehört, in einen Verriegelungszustand.

9. Steuerverfahren eines Spannungswechselrichters gemäß Anspruch 4, **dadurch gekennzeichnet, dass**, wenn ein Kurzschlussausfall in einem der Schaltmitteln (Q10) erfasst wird, das Schaltelement (Q22), an das das Schaltmittel im Kurzschluss (Q10) angeschlossen ist, in den Durchgangszustand geschaltet wird.

10. Steuerverfahren eines Spannungswechselrichters gemäß Anspruch 4, **dadurch gekennzeichnet, dass**, wenn kein Kurzschlussausfall in den Schaltmitteln erfasst wird, alle Schaltmittel (Q17, Q18, Q19, Q20, Q21, Q22) in den Verriegelungszustand geschaltet werden.

## Claims

1. Voltage inverter comprising:
- A load (1) comprising n phases (2, 3, 4), each phase (2, 3, 4) having a first terminal (5, 6, 7) and a second terminal (8, 9, 10);
- a first (12) and a second cell (13) each comprising n branches (14, 15, 16, 17, 18, 19), each branch comprising:
o two switching means (Q1/Q4, Q2/Q5, Q3/Q6, Q7/Q10, Q8/Q11, Q9/Q12) connected in series, each switching means being able to be placed in an on state or in an off state,
o a mid-point (20, 21, 22, 23, 24, 25) positioned between the two switching means,
each first terminal (5, 6, 7) of each of the phases (2, 3, 4) of the load being connected to one of the mid-points (20, 21, 22) of the first cell (12), each second terminal (8, 9, 10) of each of the phases (2, 3, 4) of the load being connected to one of the mid-points (23, 24, 25) of the second cell (13),
- a DC voltage source (11),
**characterised in that** the first cell is connected to the positive terminal of the DC voltage source via a first electrical isolation means and to the negative terminal of the DC voltage source via a second electrical isolation means, and **in that** the second cell is connected to the positive terminal of the DC voltage source via a third electrical isolation means and to the negative terminal via a fourth electrical isolation means, each electrical isolation means being able to be placed in an on state or in an off state.

2. Voltage inverter according to the preceding claim, **characterised in that** each switching means (Q1/Q4, Q2/Q5, Q3/Q6, Q7/Q10, Q8/Q11, Q9/Q12) is constituted of a static switch (T) and a diode (D) in antiparallel.

3. Voltage inverter according to any of the preceding claims, **characterised in that** it further comprises a device for the control and surveillance of faults able to:
- control the switching means and the electrical isolation means,
- detect the fault of one of the switching means and
- detect the fault of the connection between one of the terminals of one of the phases and one of the mid-points.

4. Voltage inverter according to any of the preceding claims, **characterised in that** each mid-point (20, 21, 22, 23, 24, 25) is connected to a neutral point (30, 31) via a switching element (Q17, Q18, Q19, Q20, Q21, Q22), the switching element being able to be placed in an off state or in an on state.

5. Method for controlling a voltage inverter according to any of claims 1 to 4, **characterised in that**, when no fault is detected, the control method comprises the following steps:
- Placing in an off state the electrical isolation means (Q13, Q14) connected to the first cell (12),
- Controlling the switching means (Ql, Q2, Q3, Q4, Q5, Q6) of the first cell (12) so that the first cell (12) forms a neutral point to which are connected the n phases (2, 3, 4) of the load (1),
- Placing in an on state the electrical isolation means (Q15, Q16) connected to the second cell (13);
- Controlling the switching means (Q7, Q8, Q9, Q10, Q11, Q12) of the second cell (13) so that the two switching means of a same branch (Q7/Q10, Q8/Q11, Q9/Q12) of the second cell (13) are in opposite states, one being on and the other being off.

6. Method for controlling a voltage inverter according to any of claims 1 to 4, **characterised in that**, when no fault is detected, the control method comprises the following steps:
- Placing in an on state the four electrical isolation means (Q13, Q14, Q15, Q16);
- Controlling the switching means (Q1 to Q12) so that each phase (2, 3, 4) forms with the two branches to which it is connected an H bridge.

7. Method for controlling a voltage inverter according to any of claims 1 to 4, **characterised in that**, when a fault is detected in one of the switching means (Q10), the control method comprises the following steps:
- Placing in an off state the electrical isolation means (Q15, Q16) which are connected to the cell (13) to which the faulty switching means (Q10) belong;
- Controlling other switching means (Q7, Q8, Q9, Q11, Q12) of the cell (13) to which the faulty switching means (Q10) belong so that the cell (13) to which the faulty switching means (Q10) belong forms a neutral point to which are connected the n phases (2, 3, 4) of the load (1).

8. Method for controlling a voltage inverter according to any of claims 1 to 4, **characterised in that**, when a fault is detected in the connection between one of the terminals of one of the phases (2) and one of the mid-points (20), the control method comprises the following steps:
- Placing in an off state the switching means (Q1, Q4, Q9, Q12) which are connected to the phase (2) which belongs to the faulty connection.

9. Method for controlling a voltage inverter according to claim 4, **characterised in that**, when a short-circuit fault is detected in one of the switching means (Q10), the switching element (Q22) to which is connected the switching means in short-circuit (Q10) is placed in an on state.

10. Method for controlling an inverter according to claim 4, **characterised in that**, when no short-circuit fault is detected in the switching means, all of the switching elements (Q17, Q18, Q19, Q20, Q21, Q22) are placed in the off state.
